# EUROPEAN PATENT APPLICATION

(11) **EP 1 137 292 A2**
(43) Date of publication of application: **26.09.2001**
(21) Application number: 00660235.3
(22) Date of filing: 19.12.2000
(51) Int. Cl.: H04N 9/73

(54) **Measurement of illumination conditions**

(30) Priority: 31.12.1999 FI 992855
(71) Applicant: NOKIA MOBILE PHONES LTD., 02150 Espoo (FI)
(72) Inventor: Haavisto, Janne, 36110 Ruutana (FI)
(74) Representative: Johansson, Folke Anders

(57) **Abstract**

A white balance adjustment device operates by measuring the intensity of the main colours of illuminating light 40 by using LEDs (Light Emitting Diodes) as integrated colour filters and photo sensors. LEDs have typically a narrow reception band enabling measurement of light intensity on such narrow colour bands that are required in the white balancing. The intensity of each main colour in the illuminating light is measured by dedicated LEDs having corresponding colour measurement bands. The measurement of individual intensities is used in adjusting the proportional strengths of corresponding signals originating from the camera's detector, for example a CCD-array (Charge Coupled Device), in order to produce an image with a more natural colour rendition.

## Description

This invention relates to measurement of illumination conditions. It is particularly related to adjustment of white balance. White balance means the proportional intensities of the colours that human eye can detect.

When recording electronic images or making video recordings with an electronic camera (for example a video camera), it is preferable to compensate for the illumination conditions since the white balance of the illumination may vary depending upon the source of the illumination. For example, artificial illumination usually produces light having a colour spectrum that differs from that of natural light. Therefore, if artificial illumination is used, the red, green and blue components reflected from an object differ from those reflected by the object when illuminated by sunlight. The human visual system automatically adapts to the white balance of light, and at least partially compensates for the white balance of the illuminating light. Electrical image generation often produces an unnatural image unless some form of compensation is used.

To deal with this problem, an electronic camera or a video recording device may comprise individual measuring units provided for each major light component (that is, red, green and blue), each unit comprising an optical filter adjacent to an electronic detector. The light components are parts of the electromagnetic spectrum, that is colour bands comprising one or more adjacent electromagnetic frequencies. The electronic detector is typically an optical-to-electronic signal converter such as a photodiode. The optical filters provide narrow colour bands corresponding to the respective light components. Thus, the intensities of the colour components can be measured at narrow bands corresponding to the bands at which the detectors receive light. Using such an arrangement, it is relatively easy to adjust the colour balance between the three colour components to produce an electronic image having a more natural appearance. An example of such an arrangement is described in US 5,021,874, which discloses measuring light intensity with a light intensity measuring sensor and measuring the respective intensities of red and blue components with colour filters and photodiodes. The intensities of red and blue components are used to adjust the corresponding proportions of light components in a captured video image.

An alternative way to deal with this problem uses a specific White Balance Algorithm (WBA) to process the signals received from the detectors of an imaging unit in order to estimate the balance of the colours in the illuminating light. In this way, dedicated colour balance measuring detectors are not required.

There are drawbacks with the methods known from the prior art. Dedicated colour filters and detectors are space consuming. Furthermore, they increase production costs and add complexity. Alternatively, if optical image information is used in isolation for white balancing, this requires complex algorithms, and so sufficient computing and memory capabilities must be provided. Increased computing and memory capabilities generally lead to a higher power consumption, a greater price and greater complexity. In addition, additional components must be accommodated.

The size of a device and the power consumed by it are important issues in the case of small hand-held devices such as mobile telephones. These issues will be even more important in the future. Forthcoming mobile telephones are likely not only to be suitable for pure audiophonic communication but also for still image capture and video conferencing.

According to a first aspect of the invention there is provided a white balance measurement unit for measuring the intensity of at least two light components making up an illuminating light, characterised in that
said white balance measurement unit comprises at least one LED (Light Emitting Diode) for generating an electronic measurement signal corresponding to the intensity of at least one of said light components in said illuminating light.

According to a second aspect of the invention there is provided a white balance adjustment device comprising a white balance measurement unit for measuring the intensity of at least two light components making up an illuminating light, characterised in that
said white balance measurement unit comprises at least one LED (Light Emitting Diode) for generating an electronic measurement signal corresponding to the intensity of at least one of said light components in said illuminating light.

Preferably, the device has means for adjusting colour balance of an electrically recorded image using the electronic measurement signal.

Preferably, the device comprises at least one LED that is arranged to be used both for white balance adjustment and for exposure control.

According to a third aspect of the invention there is provided a recording device for recording an image in an electronic form comprising:
a white balance adjustment device comprising a white balance measurement unit for measurement of the intensity of at least two light components making up an illuminating light, characterised in that
   said white balance measurement unit comprises an LED (Light Emitting Diode) for generating an electronic measurement signal corresponding to the intensity of at least one of said light components in said illuminating light, and
the recording device comprises a means for capturing an electronic image of an object.

Preferably, the recording device has means for adjusting balance of at least two colour components of the captured electronic image on the basis of the measured intensity of illuminating light of at least two light components.

According to an embodiment of the invention, the recording device has telecommunications means for transmitting the captured electronic image. Preferably the recording device is a mobile telephone.

According to a fourth aspect of the invention there is provided a method for white balance measurement comprising the steps of:
measuring the intensity of at least two components of illuminating light, characterised in that
the measuring of intensity of at least one of said components is carried out by an LED (Light Emitting Diode).

According to a fifth aspect of the invention there is provided a method for white balance adjustment comprising the steps of:
recording an electronic image comprising at least two colour elements,
measuring the intensity of at least two components of illuminating light, characterised in that the measuring of intensity of at least one of said components is carried out by an LED (Light Emitting Diode), and
adjusting the balance of the colour elements on the basis of the measured intensity of illuminating light of at least two light components.

The reverse current passing through an LED can be used to measure an illuminating light component. In an embodiment of the invention, the same LED is used alternately for radiating one light component and for sensing the intensity of one light component, these components not necessarily corresponding to same colour band.

Advantageously, by using two or more LEDs that are sensitive to different colours, it is possible to provide in a compact size individual colour band intensity measurement means for two or more colour bands.

Preferably, intensity measurement of a colour band is carried out using an LED, without any coloured glass or plastics as an optical filter, since LEDs have an intrinsic property of measuring only a narrow colour band. This reduces space requirements, simplifies design and facilitates the assembly of white balance adjustment devices. The invention can be used in partial combination with prior art solutions, for example one of the light components may be measured using a prior art arrangement with a colour filter and a sensor assembled into a unit. This may be advantageous for providing high sensitivity measurements in case of some light components.

The present invention is suitable for all electronic image recording devices and in particular, though not necessarily, for those that can use available artificial light illuminating an object. Such devices include digital still cameras, digital video cameras, analogue video cameras, TV-cameras, surveillance devices and video teleconferencing devices.

The invention will now be described, by way of example only, with reference to the accompanying drawings, in which:
- Figure 1: is a block diagram of a prior art white balance adjustment device for use in a camera according to US 5,021,874;
- Figure 2: is a circuit diagram of a white balance measurement unit according to an embodiment of the invention; and
- Figure 3: is a block diagram of a mobile station according to an embodiment of the invention.

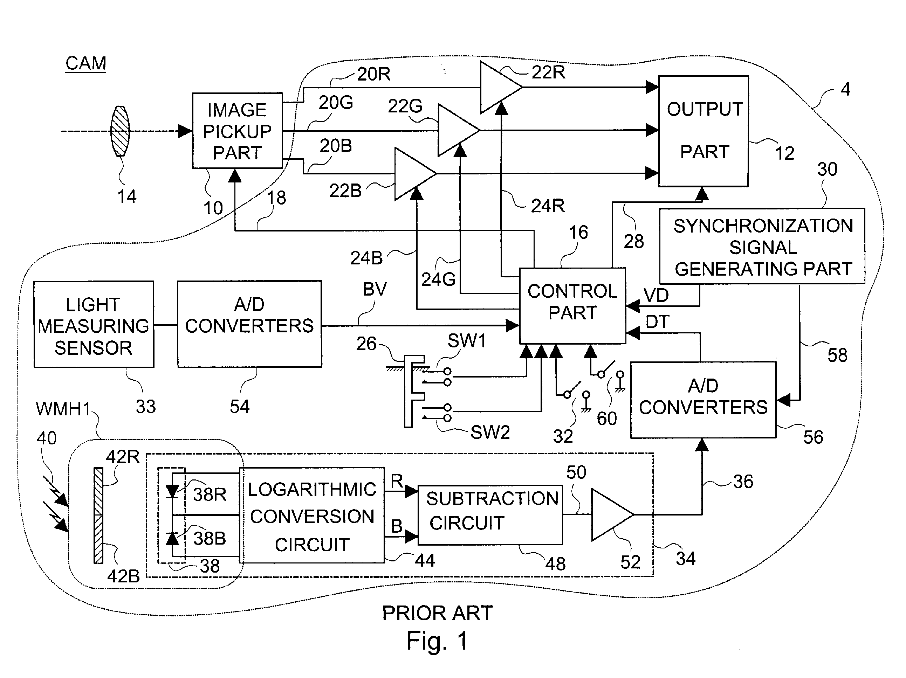

Figure 1 shows a white balance adjustment unit 4 according to the prior art (US 5,021,874) for use in an electronic camera. The camera has a Charge Coupled Device (CCD) array as a pickup part 10 for generating electronic image signals 20R, 20G and 20B corresponding to the intensities of red, green and blue light components present in light collected by a lens 14. The white balance adjustment unit 4 comprises a white balance measuring unit 34 for measuring the intensities of individual red and blue light components of illuminating light 40. The white balance measuring device 34 comprises a white balance measuring unit WMH1, a logarithmic conversion circuit 44 for processing the output of the white balance measuring unit WMH1, a subtraction circuit 48 and an amplifier 52. The white balance measuring unit contains separate sensors for measuring red (38R,42R) and for measuring blue (38B,42B) light components. Each sensor comprises a colour filter 42R,42B (for example a piece of coloured glass) and a photodiode 38R,38B for generating electronic signals corresponding to the intensity of the red and blue light components of illuminating light 40. These signals are input to the logarithmic conversion circuit 44, where the signals are logarithmically compressed into compressed colour signals R and B corresponding to intensities of the red and blue colour components. The subtraction circuit 48 determines a difference between the two components R and B of the illuminating light 40. A signal 50 representing this difference is amplified by the amplifier 52 to produce an amplified difference signal 36 forming the output of the white balance measuring device 34.

The amplified difference signal 36 produced by the white balance measuring device 34 is received by an A/D converter of the white balance adjustment device 4. The A/D converter generates a digital signal DT representing the difference of the intensities of the red and blue colour components of the illuminating light 40. The digital signal DT is then fed to a control part 16.

The overall intensity of the illuminating light 40 is measured by a light intensity measuring sensor 33. The light intensity measuring sensor 33 is usually a photodiode or a phototransistor without any coloured filters. The light intensity measuring sensor 33 measures the intensity of a broad band of light spectrum. The output of this sensor 33 is converted from analogue to digital form by an A/D converter 54 and then fed to the control part 16.

The control part 16 receives an input D_{T} based on the electronic signals R and B and an input BV based on the overall intensity of the illuminating light 40. The control part 16 then adjusts the proportional strengths of the electronic image signals 20R, 20G and 20B with adjustable amplifiers 22R, 22G and 22B in order to balance the intensities of the red, green and blue image signals.

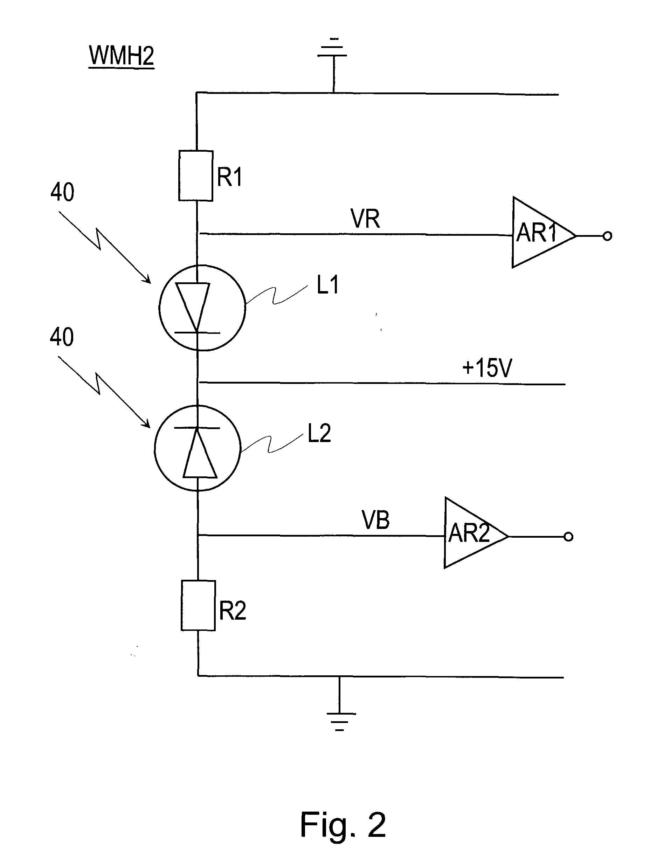

Figure 2 shows a circuit diagram of a white balance measurement unit WMH2 according to an embodiment of the invention. The white balance measuring unit WMH2 may be used in the white balance adjustment unit 4 according to the prior art in place of the white balance measuring unit WMH1.

Unlike the white balance measuring unit WMH1 of Figure 1, the white balance measuring unit WMH2 comprises LED sensors, namely a first LED L1 and a second LED L2. However, it is not necessary for the white balance measuring unit WMH2 to include colour filters since the LEDs act as intrinsic narrow band sensors. In the white balance measuring unit WMH2, a reverse voltage of 15 Volts is applied across a series combination of the first LED L1 and a first resistor R1 in such a way that the first LED L1 is reverse biased. Similarly, a reverse voltage of 15 Volts is applied across a series combination of the second LED L2 and a second resistor R2 in such a way that the second LED L2 is reverse biased. The reverse current of each LED is measured as a voltage difference (VR,VB) across the resistor in series with the reverse coupled LED. The voltage differences VR and VB are further amplified with amplifiers AR1 and AB1 and are thus measurable by the device of Figure 1, which receives these signals as inputs to block 44. The reverse voltage and the resistance of the resistors depend on the available supply voltage, the device using the white balance measurements and on the choice of the LEDs.

The operation of the white balance measuring unit WMH2 is based on measurement of the reverse current of an LED. The reverse current is responsive to the intensity of a light incident on the LED within a narrow frequency band. The colour band measured by an LED is inherent from its physical characteristics. The "measurement" band is not always the same as the colour band the LED would emit if it were used in forward bias to emit light. Thus, the first LED L1 is selected to have a measurement band that is appropriate for measuring the intensity of light in a frequency band corresponding to blue light. The second LED L2 is selected to have a measurement band that is appropriate for intensity of light in a frequency band corresponding to red light. When the white balancing measurement unit WMH2 is used in place of the white balancing unit WMH1, the LEDs are selected so that their measurement bands correspond to the measurement bands of the white balance measuring unit WMH1.

In an alternative embodiment, a green measuring LED is used as the light intensity measuring sensor 33 for exposure measurement and control. Generally, green light correlates well with the total intensity of light and thus it can be used as a measure of light intensity, or exposure.

It should be appreciated that although a light intensity measuring sensor and two LEDs are used in this particular embodiment, other combinations may be used. The two light components to be separately measured can be any two of the three light components red, green and blue. In addition, a light intensity measuring detector comprising a combination of a filter and a photodetector according to the prior art can be used to measure the intensity of one colour, for example blue. Typically, an LED measurement of blue light intensity is less sensitive than corresponding measurements of red and green. Therefore, the blue colour measurement LED of Figure 2 is replaced with a green colour measurement LED in an alternative embodiment. In this case, the control part 16 derives information concerning the blue light intensity. The light intensity measuring sensor 33 responds to the sum of intensities of all colours, blue included, and the LED sensors provide an indication of the intensities of the two other light components. Thus, the total intensity that is not explained by red and green light components is interpreted as blue light intensity.

In another embodiment of the invention more than two or three LEDs are used to measure the light components. For example, five different colour bands could be measured to further improve the accuracy of the white balancing. The number of the LEDs to be used may be more than one. Use of three to five LEDs is preferred. The white balancing may be improved by increasing the number of light component measurements.

In an embodiment of the invention, at least one LED is controlled to radiate light at certain periods of time and to sense intensity of a colour band at other periods of time. This is carried out by using a switching control unit that switches the LED either to sensing electronics or to illuminating electronics. In this way, the same LED may be used for white balance measurement and, for example, for indicating status information. In illumination use, the LED is used in a forward bias configuration as opposed to the sensor use, where the LED is used in a reverse bias configuration.

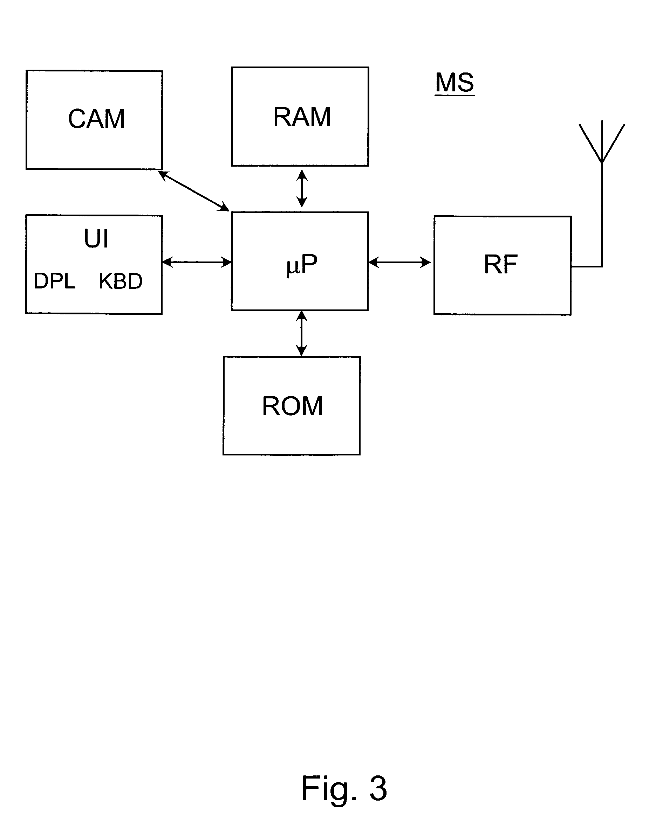

Figure 3 is a block diagram of a mobile station according to an embodiment of the invention. A microprocessor µP controls the blocks responsible for the mobile station's different functions: a random access memory RAM, a radio frequency block RF, a read only memory ROM, a user interface Ul having a display DPL and a keyboard KBD, and a digital camera block CAM corresponding to the digital camera CAM shown in Figure 1. The microprocessor's operating instructions, that is program code and the mobile station's basic functions have been stored in the mobile station in advance, for example during the manufacturing process, in the ROM. In accordance with its program, the microprocessor uses the RF block for transmitting and receiving messages on a radio path. The microprocessor monitors the state of the user interface Ul and controls the digital camera block CAM. The camera block CAM comprises a white balance adjustment device and a white balance measurement unit according to the invention. In response to a user command, the microprocessor instructs the camera block CAM to record a digital image into the RAM. Then, a user may command the mobile station to display the image on its display or to send the image using the RF block to another mobile station, wired telephone, facsimile device or another telecommunications device.

The term "LED" refers to a component well known for a person skilled in the art having a diode functionality which can emit light if connected to a sufficient forward voltage. It should be appreciated that the LEDs used in the invention may not actually emit light or may not have been designed for such a purpose. However, in the interests of economy, the invention may use mass produced standard components in a way different to their intended use. It should also be appreciated that the invention is not restricted to use of discrete LED components, but also covers embodiments in which devices operating in a way corresponding to the operating principle of an LED are implemented as integrated circuits or integrated onto a Printed Circuit Board PCB.

Although optical filters are not necessary for LEDs to operate as narrow colour band light intensity sensors, they may be used to match the sensitivities of different types of LEDs. In this case, the same hardware that is designed to process the signal generated by the LEDs may be switched periodically to each one of the colour band intensity sensors. This may provide a further reduction in manufacturing costs.

This paper presents the implementation and embodiments of the invention with the help of examples. It is obvious to a person skilled in the art, that the invention is not restricted to details of the embodiments presented above, and that the invention can be implemented in another embodiment without deviating from the characteristics of the invention. Thus, the presented embodiments should be considered illustrative, but not restricting. Hence, the possibilities of implementing and using the invention are only restricted by the enclosed patent claims. Consequently, the various options of implementing the invention as determined by the claims, including the equivalent implementations, also belong to the scope of the present invention.

## Claims

1. A white balance measurement unit (34) for measurement of the intensity of illuminating light (40) of at least two light components (R,B) making up the illuminating light, **characterised** in that
said colour measurement unit comprises at least one LED (Light Emitting Diode) (L1,L2) for generating an electronic measurement signal (R,B) corresponding to the intensity of at least one of said light components in said illuminating light.

2. A white balance measurement unit (34) according to claim 1, **characterised** in that said unit comprises
at least one dedicated LED (L1,L2) for each one of said light components for generating an electronic measurement signal for each one of said light components (R,B).

3. A white balance adjustment device (4), **characterised** in that
the device comprises a white balance measurement unit (34) according to any preceding claim.

4. A white balance adjustment device (4) according to claim 3, **characterised** in that the device comprises:
an input (20R,20G,20B) for receiving at least two electronic colour signals each corresponding to one of said light components, and
an adjusting means (22R, 22G, 22B, 16) for adjusting proportional strength of said colour signals corresponding to said electronic measurement signals (R,B).

5. A white balance adjustment device according to claim 3 or 4, **characterised** in that
the device has means (56,16,22R,22G,22B) for controlling an electrical image signal using the electronic measurement signal.

6. A white balance adjustment device according to any of claims 3 to 5, **characterised** in that
the device comprises at least one LED that is arranged to be used both for white balance adjustment and for exposure control.

7. A recording device (CAM) for recording an image in an electronic form comprising:
a white balance adjustment device (4) comprising a white balance measurement unit (34) for measurement of the intensity of illuminating light (40) of at least two light components (R,B) making up the illuminating light, **characterised** in that
said white balance measurement unit comprises at least one LED (Light Emitting Diode) for generating an electronic measurement signal corresponding to the intensity of at least one of said light components in said illuminating light; and
said recording device comprises a means (10) for capturing an electronic image of an object.

8. A recording device (CAM) according to claim 7, **characterised** in that
the recording device has means (56,16,22R,22G,22B) for adjusting balance of at least two colour components (20R,20G,20B) of the captured electronic image on the basis of the measured intensity of illuminating light of at least two light components (38R,38B).

9. A recording device (CAM) according to claim 7 or 8, **characterised** in that
said device is selected for the group consisting of: a digital camera (CAM), a video camera, a digital video camera, a TV-camera and a mobile station (MS).

10. A recording device (CAM) according to any of claims 7 to 9, **characterised** in that
at least one LED is arranged to generate an electronic measurement signal at a certain time and to generate light at another time.

11. A recording device according to any of claims 7 to 10 **characterised** in that it comprises a mobile telephone.

12. A method for white balance measurement comprising the steps of:
measuring the intensity of at least two components of illuminating light, **characterised** in that
the measuring of intensity of at least one of said components is carried out by an LED (Light Emitting Diode).

13. A method for white balance adjustment comprising the steps of:
recording an electronic image comprising at least two colour elements,
measuring the intensity of at least two components of illuminating light, **characterised** by
measuring intensity of at least one of said components by an LED (Light Emitting Diode), and
adjusting the balance of the colour elements on the basis of the measured intensity of illuminating light of at least two light components.
